# EUROPEAN PATENT SPECIFICATION

(11) **EP 3 335 847 B1**
(45) Date of publication and mention of the grant of the patent: **30.09.2020**
(21) Application number: 16204564.5
(22) Date of filing: 16.12.2016
(51) Int. Cl.: B27N 3/00, B29C 70/22, B27N 3/14

(54) **FLOOR PANEL FOR A SHIPPING CONTAINER**
BODENPLATTE FÜR EINEN VERSANDCONTAINER
PANNEAU DE PLANCHER POUR CONTENEUR

(43) Date of publication of application: 20.06.2018
(73) Proprietor: Mayfair Vermögensverwaltungs SE, 20354 Hamburg (DE)
(72) Inventor: Nijsse, Jeroen, 4433BG Hoedekenskerke (NL)
(74) Representative: Gille Hrabal

(56) References cited:
- JP-A- S63 286 339
- JP-A- 2003 253 869
- JP-A- 2011 093 097
- US-B1- 9 434 421

## Description

The invention concerns a container floor panel for use as flooring of a shipping container as well as a method to produce a container floor panel.

A shipping container is commonly placed fully-loaded from a truck on a ship. A standard container can often carry up to 20 tons fully loaded. The flooring of the container commonly comprises container floor panels that are the main structural component to carry the cargo loading.

Such container floor panels must meet high requirement for mechanical performance, which are defined specifically for this niche product of container floor panels by regulatory authorities.

Furthermore, the market usually demands a long service life of at least 12 to 15 years. During this service life span, high floor panel bond strength, planar shear strength and adhesive bond durability should be ensured despite the challenging operational environmental conditions.

The operational environmental conditions for a container floor panel for use as flooring of a shipping container include rapid and significant changes in temperature and humidity. And especially at sea, the air has a high salt and moisture content. Therefore, a multi-layered container floor panel is commonly susceptible for detachment of the neighboring layers especially at the edge of the panel.

The reason is often different temperature and/or moisture expansion behavior of the neighboring layers. Detached areas with failed bond between neighboring layers facilitate entry of moisture and water and thus lead to reduced service life.

The container flooring industry usually uses high-density hardwood species from the tropical forest to produce multiple-layer thick plywood as container floorboards. However, tropical hardwood forests are rapidly diminishing.

To protect the natural environment and decrease the consumption of tropical hardwood, it would be desirable to develop a new type of container flooring made by rather sustainable and environmentally-friendly resources that still match the high standard requirements set by regulatory authorities and eventually solve one or more of the present issues of conventional container floor panels for use in shipping containers.

The documents WO10125038A1, US8557389BB, US8563137B, US2008098935A, US2006179733A, US2011171404A, US2010015389A, CA2638079A1, and US2005153150A disclose panels that are indicated to allow the use as container flooring and which comprise no resources or at least less resources from tropical hardwood forests.

Document US20090260918A discloses an acoustical panel on the ground of renewable components. However, acoustical panels and other panels that are not made for the use as shipping flooring are not relevant in this context due to said uncommon requirements of this niche product.

Document JP2003253869A discloses a woody board being a fiberboard formed by laminating a plurality of lint mats formed by dispersing an adhesive in a lint aggregate, and then molding them by thermopressing, and a surface finishing material is bonded to both front and rear faces of the woody board. The lint is obtained from either one of kenaf, jute, sisal, oil coconut and coconut.

Document JP2011093097A discloses a fiber board containing long lignocellulose fibers and an adhesive for bonding lignocellulose fibers together that are oriented approximately in the same direction.

The purpose of the invention is to provide such new type of container flooring for use as flooring of a shipping container.

For the solution of the problem serves a container floor panel for use as flooring of a shipping container according to claim 1 as well as a method to produce a container floor panel according to claim 13. Preferred embodiments are described in the dependent claims.

The above described features known from the prior art can be combined alone or in combination with one of the below disclosed aspects and embodiments of the invention, if not explicitly stated differently.

The problem is solved by a container floor panel for use as flooring of a shipping container, the container floor panel comprises several layers with at least one reinforcement layer formed by fibers with a length of at least 300 mm.

A container floor panel for flooring of a shipping container particularly fulfills the requirements of regulatory authorities like in Europe, China, USA and/or Japan that are in force at the priority date. For example, the IICL (Institute of International Container Lessor) has specified such requirements.

Several layers refer to more than one layer. In particular, each layer is oriented in parallel to the later container floor panel like a sandwich structure. Each layer generally has a top side and a bottom side opposed to the top side, wherein the thickness of the layer corresponds to the distance between the top side and the bottom side. In particular, the top side and bottom side are extending in a length and width direction of the layer and/or the later container floor panel. Preferably, the top side and bottom side are oriented in parallel and/or in parallel to a top side and/or bottom side of the later container floor panel. In general, the length direction and the width direction are oriented orthogonally to each other while the direction of the thickness is oriented orthogonally to both the length direction and the width direction. A cross section generally refers to a section expanding orthogonal to the length direction.

Reinforcement layer means a layer to reinforce particularly another layer to fulfill the above mentioned mechanical requirements. Such reinforcement layer can therefore enable to use sustainable and environmental friendly panels for example as a core layer, which would otherwise not meet the above mentioned mechanical requirements.

The reinforcement layer therefore commonly placed adjacent to a core layer for providing substantive mechanical strength to the container floor panel and/or a cover layer as very outer layer of the container floor panel.

Layer formed by fibers generally means that the fibers represent the major or only structural material in that layer particularly except binder. Binder commonly accomplishes the bond between the fibers and/or of the reinforcement layer to a neighboring layer.

Structural material particularly make up most of the volume of the layer and/or having the highest percentage by weight in the layer, wherein the structural material mainly contribute to the mechanic strength of the layer particularly when connected together with the binder.

Fiber basically refers to a particularly thin but long wire-shaped material, in particular natural material like a multi-cell fiber extracted from a plant. In principle, a fiber can also be made of artificial or synthetic material like a plastic fiber. A pipe-shaped or half-shell-shaped structural material like a strand of straw or slit straw is therefore not a fiber within the meaning of the present invention.

Fiber typically refers to an extracted or separated fiber. A fiber embedded in a plant tissue of a piece of plant like a wood chip or bamboo stick is not extracted or separated.

At least 300 mm refer to the average length, preferably the average length of all fibers, i.e. all fibers that are used as structural material in the reinforcement layer. Particularly, at least 80 %, preferably 90 %, of all fibers of the reinforcement layer have a length of at least 300 mm.

In particular, length of a fiber or fiber length refers to the distance between both ends of the fiber in the reinforcement layer particularly after arrangement, alignment and/or fixation preferably on a neighboring layer particularly prior to and/or after hot pressing. In particular, a fiber has only two and/or opposed ends preferably corresponding to the above mentioned both ends of the fiber.

The length of a fiber or fiber length can also refer to the length of the straightened fiber, i.e. the length of the fiber in straightened condition. In straightened condition, the fiber forms a line, i.e. straight line, between both ends of the fiber.

The invention is based on the insight that a reinforcement layer formed by fibers with a length of at least 300 mm has a very little own expansion and deformation tendency and behavior upon rapid and big temperature and moisture changes like in a container at sea. Furthermore, such reinforcement layer was found to have the capability to very well adapt to expansion and deformation of its neighboring layer, in particular the neighboring core layer.

For this reason, a reinforcement layer formed by fibers with a length of at least 300 mm help to maintain the bond between the layers in particular at the edge of the container floor panel, so that water and moisture are better prevented from entering the panel. An increase service life can be obtained.

Furthermore, thanks to the reinforcement layer according to the invention, sustainable and environmental friendly materials for the core layer can be applied which would otherwise not meet the standard requirements of container floor panels, namely e.g. an in parallel direction measured MOE >10.000 MPa and MOR > 85 MPa.

Additionally, fibers with a length of at least 300 mm can also be provided as natural fibers and as such further contribute to the sustainability and environmental protecting character of the new type of container flooring according to the present invention.

In one embodiment, the fibers are natural fibers. Preferably all fibers are natural fibers, particularly all fibers that serve as structural material of the reinforcement layer. Natural fibers means fibers for example made of ramie (Boehmeria nivea), flax (Linum usitatissimum), hemp (Cannabis sativa), jute (Corchorus capsularis), manila hemp (Musa textilis), and/or sisal (Agave sisalana). Natural fibers can be typically obtained with a length of more than 300 mm, often more than 900 mm, and/or at most 2500 mm before cutting.

From the microbiological point of view, natural fiber can correspond to a cell-bundle particularly of prosenchymatous cells that are bonded together in particular in longitudinal direction by natural gums. Preferably, the natural fiber is a multi-cell fiber.

From chemical point of view, natural fiber can comprise or essentially consist of cellulose, i.e. microfiber of the cell wall, hemicelluloses, and/or lignin, i.e. biopolymer components of the cell wall. The cellulose group is a highly crystalline structure particularly with theoretical Young's modulus of 130 Gpa.

A natural fiber can be obtained for example by a process known as decortication, where the plants or parts of it like stems or leaves are crushed, beaten, and brushed away particularly by a rotating wheel set with blunt knives, so that only the fibers remain, which are usually subsequently dried.

The natural fiber may be physically processed by for example washing, drying, drying under vacuum and heat, cleaning, combing, carding, chopping, spinning, and/or chemical processing like steam treatment to provide desired properties.

As an example, sisal that is also known as pineapple fiber is a perennial herb and Agavaceae. It is original home in Mexico, now it is raised chiefly in Africa, Latin America and Asia. The term "sisal fiber" usually refers to inner fibrous material of the sisal plant which is separated from the leaves of the sisal plant. Long sisal fiber may be produced by stripping the fibers from the leaves which have been pressed.

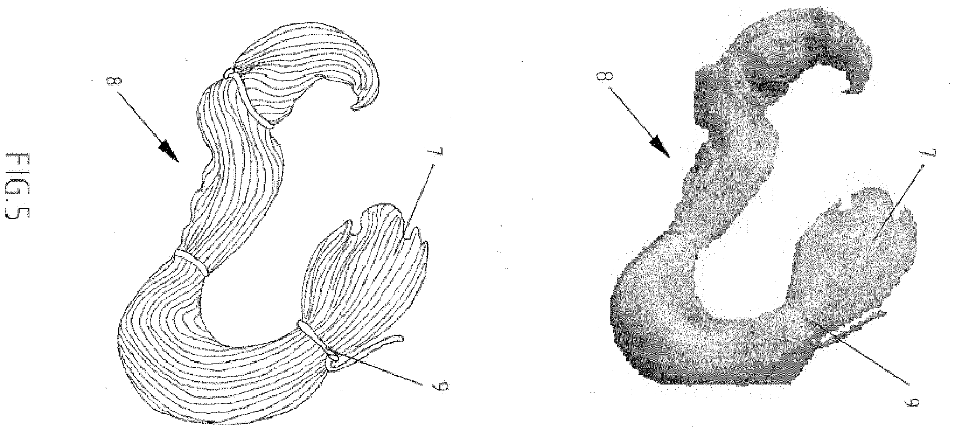

In one embodiment, the fibers are sisal fibers. A picture of sisal fibers are shown in figure 5.

The comparatively small diameter and wire-shape structure of the sisal fibers facilitates a particular low own deformation tendency and good adaptation to deformations of neighboring layers.

Alternatively, the fibers can also be ramie fibers, flax fibers, hemp fibers, jute fibers, and/or manila fibers. As a further alternative, the fibers can be a mixture of one or more of sisal, ramie, flax, hemp, jute and/or manila fibers.

In particular, fibers have the shape of long human hair of head or the hair of a pigtail.

In particular, a maximum diameter over the entire length of the or each fiber is below 0,5 mm, preferably below 0,3 mm, more preferred below 0,1 mm and/or varies over the entire length in a range between 50% of the maximum diameter and the maximum diameter. Not considered are damaged or not naturally altered parts of the fiber when determining the maximum diameter and the variation.

The use of fibers with a length of at least 300 mm, the use of natural fibers, and/or fiber diameter properties as described above contribute to a high impact strength, which is important for container floor panels due to high loads that are released quickly or sometimes falling to the ground and apply a high load on a small area.

According to the invention, the reinforcement layer comprises a binder and is hot pressed.

The term "is hot pressed" means that at least the reinforcement layer underwent a hot pressing process in a hot press. In particular, also other layers or all layers of the container floor panel are hot pressed, preferably as a sandwich structure of arranged layers upon each other hot pressed together, thus thereby carrying out said hot pressing of the reinforcement layer. The reinforcement layer is thus compressed and the fibers connected by the binder and particularly to a neighboring layer accordingly.

A highly compressed layer with a high density and bond of arranged fibers with a very high reinforcing effect on the neighboring layer can be obtained while maintaining the adaptability to the deformation behavior of the neighboring layer.

In one embodiment, the fibers are aligned in an aligning direction, preferably length direction of the container floor panel.

Aligning direction refers to a direction in parallel to a predetermined axis. Aligning of fibers refers to the longitudinal orientation or axis of the fibers, i.e. the flow direction of the fiber, preferably represented as mean longitudinal axis of a fiber means the an average line or trend line representing the orientation of the overall curve of the fiber's extension in aligning direction that may reveal continuous deviations crosswise from the aligning direction like for example an S-shaped path between both ends of the path.

Particularly, the fibers, each fiber or all natural fibers are aligned only in one single aligning direction, preferably the length direction, i.e. not for example in width direction or crosswise in more than one direction.

Very high mechanical reinforcement of the core layer can be thereby obtained.

Alternatively or additionally, the fibers can be aligned in length direction, width direction, and/or diagonal direction, i.e. in parallel to a respective predetermined axis.

According to the invention, the fibers are arranged in bundles of a multiplicity of fibers, particularly being hold together by hand during arrangement to form the reinforcement layer or by holding means, i.e. the bundles each are hold together by hand during arrangement or by holding means.

A bundle is a multiplicity of aligned fibers. Aligned with respect to fibers generally means having a substantially same orientation and/or substantially coherent flow.

Substantially same oriented refers to the case where the ends, all ends or most ends of all or most of the fibers of one single bundle are hold together or being located at one end of the bundle and all other ends or most other ends or all other end of said fibers are also hold together or being located at the opposite end of the bundle. Said hold together can be carried out by hand or by holding means.

Substantially coherent flow means that the fibers have a roughly parallel flow characteristic such that a bundle of substantially coherent flowing fibers will have a common flow stream for example as shown in figure 5.

Being arranged in bundles and/or during arrangement to form the reinforcement layer refers in particular to the process of placement the fibers to form the reinforcement layer, in particular before being hot pressed. Generally, arranging a bundle or a fiber can be carried out by placing the bundle or fiber, respectively, for example on a neighboring layer to form the reinforcement layer, which undergoes hot pressing thereafter.

The fibers being arranged in bundles of a multiplicity of fibers being hold together by hand during arrangement or by holding means preferably refers to hold together in the areas of both ends, i.e. in the area of the one end and the area of the other end of the bundle and/or a fiber of the bundle. For example, if all fibers have a substantially same length, i.e. by holding aligned fibers in a bundle and cutting such bundle to a certain length, then the fibers of the bundle can be all hold together at both ends of the bundle.
By dividing the fibers in bundles, high alignment precision and ease of handling and assembly can be obtained. In addition, the assembly process can be fully automated.

Preferably, the holding means can be a band like a hair band. Preferably, the holding means is a fastening means, a fastener and/or can be turned around the multiplicity of fibers for fastening. Preferably, the holding means is elastic and/or a rubber. Alternatively, the holding means can be a wire made of metal or a strip of plastic. Particularly, the bundle is substantially wire-shaped.

In particular, the holding means is made of one or more materials that evaporate, melt and/or degrade during hot press. This reduces the risk of crack formation. Alternatively, the holding means can be made of one or more materials that can stand hot press. Either way, in the finished container floor panel, it can be seen from the fiber flow e.g. in cross sections if holding means were used to hold a bundle of fibers together or not.

The arrangement of bundles in fibers as such, e.g. when fibers were hold by hand in bundles to be arranged on a neighboring layer to form the reinforcement layer particularly before hot pressing, can be also determined based on analysis of the finished container floor panel due to the substantially flushing ends and other ends of the fibers. Moreover, the flow characteristic of one bundle which may slightly differ from that of a neighboring bundle can be in some cases identified, because the aligning of the fibers to form a bundle causes said substantially coherent flow of the fibers of the bundle (compare e.g. figure 5) such that bordering fibers of neighboring bundles of fibers may have a visible incoherent or different flow path from the fibers of their respective bundle.

In one embodiment, the reinforcement layer has the thickness of only one or at most three bundles. In other words, the thickness of the reinforcement layer corresponds to only one or at most three times the diameter of the bundle.

As a rule this correlation can be applied for the case before hot pressing and/or after hot pressing.

A reinforcement layer with high reinforcing effect can thereby be provided with little manufacturing effort.

In particular, a bundle has a length, i.e. expansion in longitudinal direction of its fibers that is higher than its expansion in crosswise direction. Preferably, the bundle has a ratio of its length to its expansion in crosswise direction, i.e. width and thickness and/or diameter, particularly before hot pressing, of at least three to one, preferred ten or twenty to one, and/or at most fifty to one, preferably forty or thirty to one. Alternatively, the bundle could have a ratio of one to one.

In particular, the width, thickness and/or diameter of the bundle before hot pressing is at least 10 mm, preferably at least 50 mm, more preferred at least 100 mm, and/or at most 500 mm, preferably at most 250 mm.

Preferably, the length of the bundle corresponds to the length of its fibers.

In one embodiment, the bundle is dimensioned such that the width is higher than the thickness, particularly before and/or after hot pressing.

Assembly time to form the reinforcement layer and improved alignment can be achieved.

In particular, the width of the bundle, i.e. in width direction of the container flooring panel, before hot pressing is at least 10 mm, preferably at least 50 mm, and/or at most 500 mm.

In particular, the thickness of the bundle, i.e. in the direction of thickness of the container flooring panel, before hot pressing is at least 10 mm, preferably at least 20 mm, and/or at most 100 mm, preferably at most 50 mm.

In the embodiment of the reinforcement layer having the thickness of only one bundles, said thickness values before and after hot pressing also apply for the thickness of the reinforcement layer.

Compared with common multilayer veneer composite plywood, a container floor panel with higher tensile strength at lower manufacturing expenditures can be obtained.

In one embodiment, the moisture content of the particularly natural fibers before hot pressing is in the range of at least 3% and/or at most 15%, i.e. base on the dry fiber weight.

According to the invention, the bundle has a length of at least 300 mm, and/or at most the length of the container floor panel, if larger than 300 mm. The length is preferably at most 2440 mm, preferably at most 2400 mm. In particular, the length is measured along the aligning direction of the fibers or multiplicity of fibers of the bundle.

The bundle of fibers generally has a length direction, which is substantially straight after arranging the bundles to form the reinforcement layer before hot pressing. This length direction of the bundle generally corresponds to the longitudinal axis of the bundle and/or the aligning direction of the fibers of the bundles.

In particular, when the bundle of fibers is arranged and released, i.e. not hold any more together, the fibers will spread crosswise the aligning direction but substantially remain their basic orientation like releasing a bundle of hair that was put on the ground. Especially due to the arrangement of one bundle next to another bundle in a row, the space to spread out is generally limited. Also the adherence means for fixation of the bundles reduce spearing out of the fibers of a released bundle after arrangement. Bundle of fibers refers to loose, i.e. not on purpose twisted, fibers that are basically divided or grouped together in bundle units for ease of handling.

In an alternative embodiment, the length of the bundle exceeds the average length of the fibers, wherein the fibers can be distributed over the length of the bundle preferably substantially homogenously, aligned in the length direction of the bundle, and/or in an overlapping manner.

In one embodiment, the reinforcement layer is formed by rows of successively arranged bundles in an aligning direction or rows of bundles arranged adjacent to each other across the aligning direction.

A row of successively arranged bundles means that one bundle is arranged after the preceding bundle in the row to form one continuously extending chain of bundles in the aligning direction. In other words, a row of successively arranged bundles may look like one single bundle over the entire length of the row that was cut into length segments with a length of at least 300 mm.

Rows of bundles arranged adjacent to each other across the aligning direction means that the rows particularly of successively arranged bundles are arranged in a matrix structure, i.e. having rows and columns, or a matrix-like structure. In particular, the rows of bundles and the adjacent rows are all arranged on one plane extending in length direction and width direction. In particular, the rows of bundles are covering the entire area defined by the length and the width of the container floor panel.

In one embodiment, more than 80 %, preferably 90%, even more preferred 95%, of the fibers are aligned such that a geometrical line connecting both ends of the fiber, i.e. one single fibers, forms a deviation angle to the aligning direction for the fibers within a range of -20° and 20°, i.e. within ±20°, preferably within ±15°, even more preferred within ±10°.

High mechanical performance of the container flooring panel can be achieved.

In one embodiment, the fibers have a length of at least 900 mm, preferably at least 1000 mm, and/or at most 2500 mm. The length particularly is the average length and/or at least 80 % of the fibers having a length or more than 900 mm.

The container floor panel comprising at least one reinforcement layer formed by at least 900 mm or 1000 mm long fibers reveals a significant increased MOE (modulus of elasticity) and/or MOR (modulus of rupture) compared to container floor panel with a reinforcement layer formed by fibers with a length between 300 mm and 800 mm.

In one embodiment, after hot pressing, the reinforcement layer is at least 1,5 mm and/or at most 10 mm thick. A reinforcement layer of at least 1,5 mm thickness enables a significant increased MOE (modulus of elasticity) and/or MOR (modulus of rupture) of the container floor panel compared to container floor panel with a reinforcement layer with a thickness of less than 1,5 mm.

In particular, the above reinforcement layer thickness of at least 1,5 mm may refer to the average thickness in the container floor panel or the minimum thickness in the container floor panel.

Above 10 mm, the manufacturing expenses are rising faster than the increase in MOE and/or MOR.

In one embodiment, after hot pressing, the core layer has a thickness that is higher than the thickness of the reinforcement layer, particularly at most 9 times higher.

Few fibers are thus consumed for production of the container floor panel.

It is also basically possible that, after hot pressing, the reinforcement layer has a thickness that is higher than the thickness of the core layer, particularly at most 2,5 times higher.

Very high mechanical strength characteristics can thereby be obtained even using a comparatively week core layer.

In one embodiment, the reinforcement layer is neighboring the core layer from below and/or above.

Neighboring the core layer means being immediately adjacent to the core layer. An intermediate layer for bonding both layers does not effect said immediate neighboring.

As the contribution of each layer of a multi-layer panel to the entire panel's strength and/or elasticity, i.e. MOR respectively MOE, is proportional to the strength and modulus of elasticity of each individual layer and the square of its distance to the central plane or central layer, typically the core layer, the farther one layer with large strength and modulus of elasticity is from the central plane or central layer, the greater the mechanical strength and elasticity it will contribute.

A reinforcement layer formed by fibers, particularly natural fibers, arranged as a mat or in bundles thereof prior to binder treatment and/or hot pressing makes it possible to obtain a light weight, high rigid container floor panel with high impact and tensile strengths.

In particular, one or only one of such reinforcement layer is sufficient to reinforce the mechanical strength of a core layer that can generally be OSB or multi-layer veneer or the sustainable and environmental friendly OSSB and OSRB boards to meet the mechanical requirements of container floor panel standards as mentioned above.

In one embodiment, the reinforcement layer is not crossed by a central plane of the container flooring panel, i.e. being entirely above or below the central plane, and/or the core layer is crossed by the central plane.

Central plane means a plane extending in length direction and width direction on a level of the direction of the thickness that equals exactly half of the thickness, i.e. in the middle or the center point of the container flooring panel.

Very efficient and effective reinforcement of the core layer can be obtained.

In one embodiment, the core layer is formed by or mainly consists of binder covered longitudinal particles of lignocellulose material with a stalk-like structure and/or having a length of less than 100 mm or less than 4 mm. A hot pressed board with a density of at least 400 kg/m3 and/or at most 950 kg/m3 can be obtained. For example, straw and reed have a typical stalk-like structure.

In particular, the particles of the core layer have a length of 100 mm to a proportion of at least 10 wt% and/or at most 80 wt%. High mechanical performance especially in a specific direction can thereby be achieved. However, the manufacturing process of a core layer with such comparatively long particles requires different size reduction and scattering devices, which are not as effective as devices that can be used to obtain and process 4 mm long particles.

The particles can also have a length of 4 mm to a proportion of at least 40 wt% and/or at most 80 wt%. High mechanical performance can thereby be achieved by means of a manufacturing process that involves less expense.

In one embodiment, the particles of the core layer have a length of more than 2 mm to a proportion of at most 80 wt%, a length between 1 mm and 2 mm to a proportion of at least 8 wt% and/or at most 20 wt%, and/or a length of less than 1 mm to a proportion of at most 15 %.

An environmentally produced OSSB or OSRB board suitable as core layer for a container floor panel according to the invention can thereby be obtained.

In particular, the particles are mostly longitudinal split into stalk half shells. The binder can then attach well to the particles.

In particular, the particles includes culms or stems from sweet grasses such as rice or rice straw, corn, wheat, barley, millet, oat, rye and/or cattail.

In particular, the particles may alternatively or additionally include textile waste, plant waste, paper waste or other light-weight, dry lignocellulose waste products.

By having the core layer formed by binder covered longitudinal particles of lignocellulose material with a stalk-like structure and/or having a length of less than 100 mm or 4 mm, a very sustainable and environmental friendly container floor panel can be provided.

In one embodiment, the core layer is an OSSB (Oriented Structural Straw Board) mainly formed by straw or an OSRB (Oriented Structural Reed Board) mainly formed by reed.

Core layer is an OSSB or an OSRB means that the core layer consists of the material of the OSSB or OSRB. The core layer can thus be a hot pressed OSSB panel or OSRB panel. Alternatively, the core layer can thus also be a piled up mat of the binder treated material of the OSSB, i.e. straw, or OSRB, i.e. reet and/or straw, which has not underwent hot pressing at the time of arranging the fibers to form the reinforcement layer. The core layer and reinforcement layer can thus be hot pressed together and both for the first time.

OSSB mainly formed by straw and/or OSRB mainly formed by reed refers to the structural material, which together with binder majorly forms the OSSB respectively OSRB. In particular, the OSSB and/or OSRB can be a single layer or multi-layer panel, i.e. after hot pressing, or mat, i.e. before hot pressing.

In particular, the straw of an OSSB and/or the reed of an OSRB are mostly or to more than 80 % longitudinal split stalks to form half shell like longitudinal particles.

By using OSSB and/or OSRB as core layer helps to obtain a container floor panel that meets with the reinforcement layer the above described standard requirements while at the same time providing a sustainable and environmental friendly container floor panel.

In one embodiment, a hot pressed OSRB board of reed with a portion of at least 10 wt%, preferably 15 wt%, more preferred 20 wt% straw and/or at most 40 wt%, preferably at most 35 wt%, more preferred at most 30 wt% straw can achieve a density of at least 500 kg/m³, preferably 600 kg/m³, and/or at most 950 kg/m³, preferably at most 800 kg/m³. Such board can have a thickness of 15 mm. A hot pressed OSRB board having 100 wt% reed can reach a density of at least 500 kg/m³ and/or at most 1000 kg/m³. Such board can have a thickness of 15 mm. A hot pressed OSSB board having 100 wt% straw can reach a density of at least 400 kg/m³ and/or at most 800 kg/m³. Such board can have a thickness of 15 mm.

In particular, a hot pressed OSRB and/or OSSB board for example with a thickness a thickness of 8 to 25 mm can reach a MOE in a major axis of at least 3500 N/mm², 4500 N/mm² or 6800 N/mm² and/or a MOE in a minor axis of at least 1200 N/mm², 1400 N/mm² or 1900 N/mm².

In particular, a hot pressed OSRB and/or OSSB board for example with a thickness a thickness of 8 to 25 mm can reach a MOR in a major axis of at least 20 MPa, 30 MPa or 40 MPa and/or a MOR in a minor axis of at least 10 MPa, 20 MPa or 30 MPa.

In particular, the OSRB and/or OSSB particles have a length of 100mm to a proportion of at least 10 wt% and/or at most 80 wt%. High mechanical performance can thereby be achieved.

Alternatively, the length of the straw and/or reed particles can be at most 120 mm and/or in average above 5 mm. A panel can thereby be provided at lower manufacturing expenditure. However, the achievable density and strength is comparatively low and an increased thickness of over 20 mm is preferred for use in the container floor panel.

Another aspect of the invention concerns a method to produce a container floor panel, particularly a container floor panel according to one of the preceding embodiments of the preceding aspect of the invention, that can be used as flooring of a shipping container and comprises several layers with at least one reinforcement layer formed by fibers with a length of at least 300 mm or 1000 mm, wherein the method steps include adding binder to the fibers and/or to a neighboring layer, arranging the fibers or bundles of a multiplicity of the fibers in rows of successively arranged bundles in an aligning direction onto the neighboring layer, wherein the rows of bundles are arranged adjacent to each other across the aligning direction to cover the neighboring layer, particularly to cover the neighboring layer entirely. Particularly, said neighboring layer is the core layer when the reinforcement layer is above the core layer. Particularly, when the reinforcement layer is below the core layer, said neighboring layer is a cover layer preferably for forming the outer bottom surface of the container floor panel.

This method enables obtaining a container floor panel with high strength and to allow an automated manufacturing process.

The definitions and embodiments of the previous aspect of the invention also apply for this method.

In one embodiment, the particles for the core layer are treaded with binder e.g. by spraying to obtain binder covered particles. In particular, a scattering head is applied to distribute and pile up the particles for the core layer in a substantially oriented manner onto a conveyor belt to form the mat representing the core layer. The mat can then be hot pressed to a board or remain as a mat before the fibers are arranged on the board respectively mat in the way according to the above described aspect of the invention.

In one embodiment, after arranging the fibers in the way according to the above described aspect of the invention, particularly onto a mat or already hot pressed board representing the core layer, the reinforcement layer and core layer are hot pressed.

In one embodiment of the container floor panel and the method to produce a container floor panel, a cover layer can be arranged onto the top of the reinforcement layer being above the core layer, onto the bottom of the reinforcement layer being below the core layer, onto the top of the core layer being above the reinforcement layer, and/or onto the bottom of the core layer being below the reinforcement layer.

The surface properties of the container floor panel can thereby be adjusted.

In particular, the cover layer comprises a craft paper and/or a bamboo curtain sheet. A bamboo curtain sheet typically comprises crosswise arranged thin bamboo strips, in particular pealed from a pole of bamboo, preferably with 5 to 20 mm width and/or less than 1 mm thickness.

Alternatively, also a hardwood veneer made of Apitong or Keruing can be used as cover layer. Despite the consumption of tropical forest wood, the later option may be necessary upon demand of the marked that is used to the properties of an outer surface made of hardwood veneer.

The features of each embodiment as well as features of the above description and the features of the below figure description can be combined with each other and combined with the subject matter of the aspects of the invention and each claim.

All combinations of one or more embodiments and/or aspects of the invention with one or more claims are hereby disclosed.

Details and further advantages are provided in the following description of the figures which depicts preferred execution examples with the necessary details and individual components.
Figure 1a: Schematic drawing of a reinforcement layer with fibers of at least 900 mm length before hot pressing.
Figure 1b: Schematic drawing of a reinforcement layer with fibers of at least 300 mm length before hot pressing.
Figure 2: Schematic exploded view of an arrangement of the layers of a container floor panel.
Figure 3: Schematic exploded view of another arrangement of the layers of a container floor panel.
Figure 4: Cross section picture respectively drawing of a container floor panel.
Figure 5: Picture respectively drawing of a bundle of sisal fibers before being arranged to form a reinforcement layer of a container floor panel.

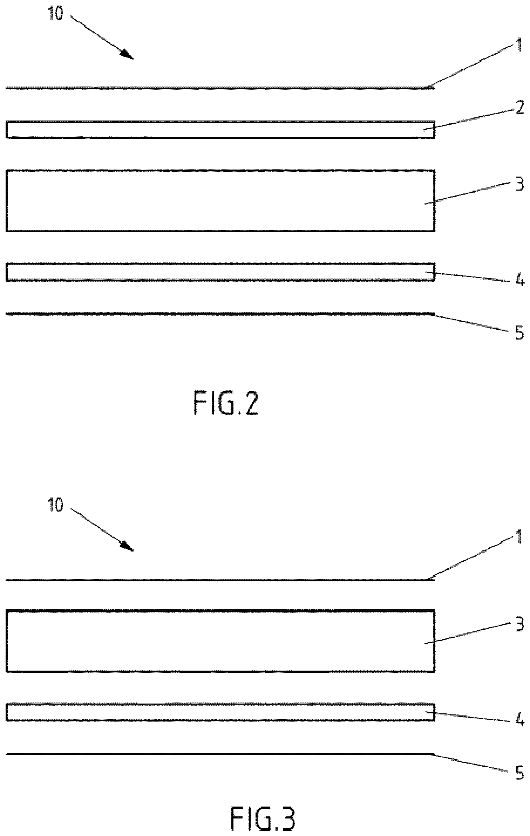

Figures 2 and 3 show embodiments of the invention in a schematic cross-section or front view in length direction 6, wherein the embodiment of Figure 2 has a reinforcement layer 2, 4 above and below the core layer 3, while the embodiment of Figure 3 only has a reinforcement layer 4 below the core layer 3.

In particular, the overall thickness of the container floor panel 10 is at least 20 mm, preferably at least 25 mm, more preferred at least 28 mm, to withstand repeated high horizontal shear loads. The container floor panel preferably has a length of 2 to 3 meters, typically about 2440 mm, and/or a width of 0,8 to 1,6 meters, typically about 1220 mm.

In particular, the core layer 3 has a thickness of at least 8 mm and/or at most 25 mm, preferably at most 22 mm. Preferably, only one single core layer is used in the container flooring panel 10.

In particular, the reinforcement layer 2, 4 of the manufactured container floor panel has a thickness of at least 1,5 mm, preferably 2 mm, and/or at most 10 mm. Basically, also a thickness of the reinforcement layer 2, 4 of at most 20 mm can be realized.

In particular, the cover layer has a thickness of at least 0,2 mm and/or at most 2 mm, preferably at most 1 mm.

The cover layer 1, 5 serves to obtain a smooth, anti-pollution and/or wear resistant surface of the container floor panel and/or as a decorate layer. In particular, the cover layer 1, 5 comprises a craft paper and/or impregnated paper, a hardwood veneer such as an Apitong, Teak or Keruing veneer, and/or a bamboo curtain sheet particularly including Moso, D.asper, B.blummeana, and/or Dlatiflorus.

Preferably, when applying a paper, an impregnation method is used, in which the paper is passed around a roller immersed in resin.

Preferably, when applying hardwood veneer, the veneer thickness, typically obtained by peeling of a wood stem, is about 0,2 mm to 1 mm and/or after drying treatment, the moisture content of the veneer reaches a range of about 7 % to 15 %. A used as a surface in the container floor panel while well preserving the original structure of the veneer can be obtained.

Figure 5 shows a bundle 8 of sisal fibers before arranging and aligning the bundle 8 respectively the fibers 7, particularly also before cutting the bundle 8 to the desired length. Holding means 9 hold the bundle 8 of Figure 5 together. As can be seen from Figure 5, the fibers have a hair like appearance and are continuously longitudinally extending wire-shaped material.

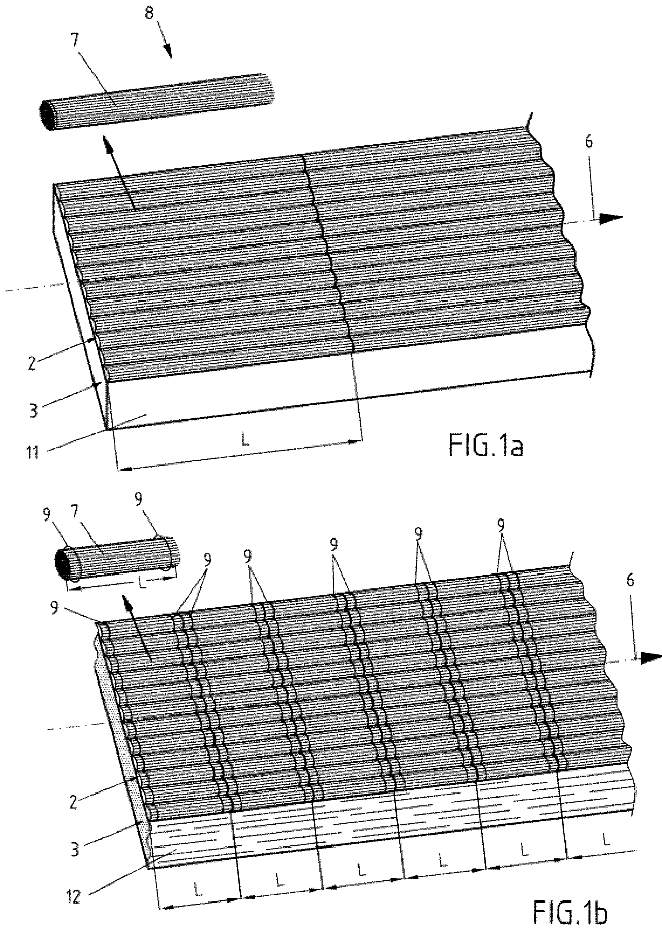

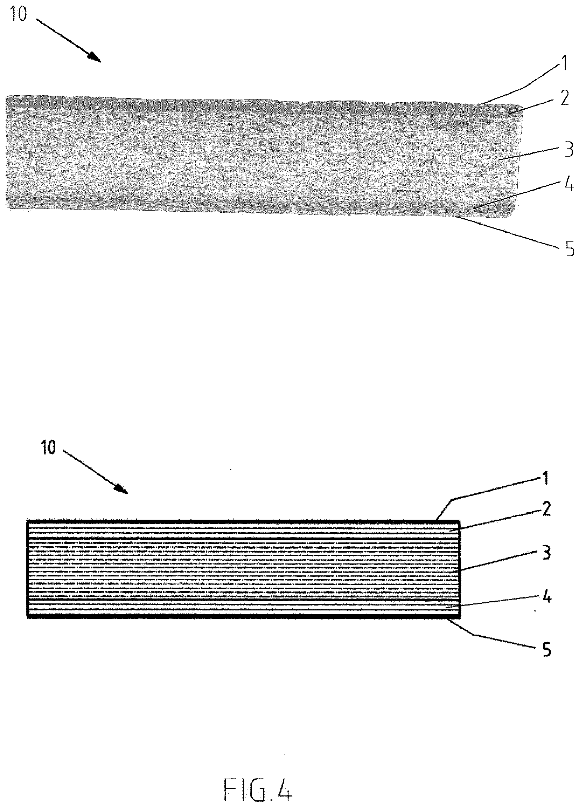

Figure 4 shows one embodiment of the invention in cross-section, which applies the layer arrangement of Figure 2 with the sisal fibers in bundles 8 of Figure 5, but without holding means 9, and arranged like shown in Figure 1a.

An example of a container floor panel 10 according to the invention such as shown in Figure 4 was produced as following:
The bundle 8 of sisal fibers was cut to a length of at least 300 mm, at least 900 mm or about 1000 mm by a cutting machine. The bundle 8 was preferably dried until the moisture content was in a range of 3 % to 15 %.

A hot pressed OSRB board 11 with in particular only reed particles as structural material and a density of 500 kg/m3 to 900 kg/m3 served as the core layer 3 with the size of 1220 mm or 1160 mm x 2440 mm or 2400 mm (width x length), which was in particular sanded to a thickness between 8 mm and 22 mm. In particular, isocyanate resin was added by spreading uniformly on the bundle 8 and/or on the core layer 3 with a resin spread amount of 20 to 50 g/kg.

The bundles 8 of fibers 7 being hold together by hand were particularly substantially homogeneously and/or symmetrically arranged along the length of the core layer 3. Two veneer layers were used as cover layers 1, 5 particularly with a thickness of less than 0,5 mm. The cover layers 1, 5 are so thin that they cannot be recognized as such in Figure 4. Two reinforcement layer 2, 4 on both sides of the core layer 3 were provided. After forming the layers on both sides of the already hot pressed OSRB board 11 as the core layer 3, the described multi-layer sandwich 1, 2, 3, 4, 5 was then hot pressed together.

In particular, the weight of the natural fiber is at least 10 wt% and/or at most 30 wt% of the core layer 3 or OSRB board. In particular, the thickness of one reinforcement layer 2, 4 after hot-pressing is in a range of 2 to 4 mm. The arranged bundles 8, the OSRB board and the two veneer layers were hot pressed at in particular 90 °C to 130 °C preferably at a speed of 0,5 to 1.2 min/mm through the hot press particularly having a hot pressing pressure in a range of 0,7 to 2,0 MPa.

After hot pressing, the container floor panel is ready for use and had a MOR in parallel direction of the length direction 6 of at least 95MPa, a MOR in perpendicular direction to the length direction 6 of at least 35 MPa, a MOE in parallel direction of at least 10500 MPa and a MOE in perpendicular direction of at least 3500 MPa at a density of 0,9 to 1.1 g/cm³.

In particular, the container floor panel 10 according to the invention such as the one shown in Figure 4 fulfills the required performance characteristics in a short span test and vehicle test required by IICL (Institute of International Container Lessor), wherein the vehicle test uses a forklift vehicle and requires a test vehicle loaded with an axle load of 3630 kg per wheel (2 wheel load of 7260 kg) to maneuver slowly over the panel for at least 5 full pass cycles with deformation less than 3 mm at several specific points. Failure for both tests includes delaminating ply separation or cracks in a layer, particularly the cover layer 1, 5, due to rolling shear and/or panel breakage due to insufficient bending stiffness and strength.

Figures 1a and 1b illustrates the arrangement of the fibers 7 during forming the layers of the container floor panel 10 prior to hot pressing. In Figure 1b, the fibers 7 have a length L of about 300 mm. In Figure 1a, the fibers 7 have a length L of at least 0,9 or 1 meter, in particular average length or minimum length.

Although the fibers 7 in the Figures 1a and 1b schematically indicate substantially flushing ends of the fibers in length direction 6, the fibers 7 can be arranged in a partially overlapping manner to avoid a gap or hollow spaces. The fibers 7 of Figures 1a and/or 1b can be arranged to form a substantially flat surface in width direction and/or length direction. This can be for example accomplished by a dense arrangement and/or flattening of the surface while maintaining the arrangement of the fibers 7 in bundles 8. Alternatively, the fibers 7 can be spread in width direction and/or length direction while disintegrate the bundles but keeping the alignment in aligning direction.

Figures 1a and 1b showing the cylindrical and ideally straight bundles 8 of fibers 7 have to be understood merely schematically for indicating the matrix arrangement principle with columns of subsequently arranged bundles 8 and rows of adjacent columns. In reality, the formed reinforcement layers prior to hot pressing usually looks rather like the bundles 8 like that of Figure 5 being glued in an substantially straight pulled aligned manner on the core layer 3 following the matrix arrangement principle of Figures 1a and 1b.

The fibers 7 can be arranged in bundles 8 being hold by hand to form the reinforcement layer (Fig. 1a) and/or by holding means 9 (Fig. 1b).

In particular, the core layer 3 prior to the hot pressing of the reinforcement layer 2, 4 may be a mat 12 (Fig. 1b) or an already hot pressed board 11 (Fig. 1a).

In particular, the arrangement of the fibers 7 in a reinforcement layer 4 below or above the core layer 3 is the same. In one embodiment, prior to hot pressing, the fibers 7 are arranged onto the cover layer 5 prior to arranging the core layer onto the reinforcement layer 4. In one embodiment, prior to hot pressing, the fibers 7 are arranged onto one side of the core layer 3 being the top side to form one reinforcement layer 2, then the core layer 3 with arranged and connected reinforcement layer 4 is turned such that the one side becomes the bottom side, and the fibers 7 are arranged onto the other side of the core layer 3 that then becomes the top side to form the other reinforcement layer 4.

In one embodiment, the container floor panel 10 according to the invention has in parallel direction of the length direction 6 a MOR of at least 90 MPa and/or a MOE of at least 10500 MPa.

In one embodiment, the binder is a resin such as urea-formaldehyde resin, melamine modified urea-formaldehyde resin, phenolicaldehyde resin and/or isocyanate.

In one embodiment, the binder is phenolicaldehyde, urea-formaldehyde resin or melamine modified urea-formaldehyde resin and/or the amount of added binder for only one reinforcement layer 2, 4 is in a range of at least 100 g binder per kg fibers, preferably at least 150 g/km, and/or at most 400 g/kg, preferably at most 300g/kg. In one embodiment, the binder is isocyanate and/or the amount of added binder for only one reinforcement layer 2, 4 is in a range of at least 20 g/kg and/or at most 50 g/kg.

In one embodiment, the hot pressing temperature is in a range of at least 80°C, preferably 100°C, and/or at most 200°C, preferably 160 °C.

In one embodiment, the hot pressing processing time is in a range of at least 0,3 min/mm, preferably 0,5 min/mm, and/or at most 2,0 min/mm, preferably at most 1,6 min/mm.

In one embodiment, the hot pressing pressure is in a range of at least 0,5 MPa, preferably 0,7 MPa, and/or at most 3,0 MPa, preferably at most 2,0 MPa.

In one embodiment, the fibers have a moisture content of at least 3%, preferably 6%, and/or at most 18%, preferably at most 15%. Higher moisture content and associated increased steam generation resulted in extremely high pressure within the container floor panel. As a result, once the hot press is opened, the rapid release of pressure caused a "blow-out" or explosive expansion is dangerous for the workers.

Generally, the method for producing the container floor panel 10 can have also at least one of the further detailed steps, which are in fact separate steps that can each be applied independent one from another:
A raw material preparation procedure includes dry the fibers 7 for the reinforcement layer and/or sanding the core layer 3 to adjust the thickness in case of a already hot pressed board as core layer.

The fibers 7 were aligned, cut to length and hold as a bundle to be fixated in a substantially straightened manner to the surface of the neighboring layer in a form-fit manner and/or adhering to the surface e.g. by use of adhesive means like binder or resin. In particular, adhesive means like binder or resin is spread uniformly on the bundle 8 and/or on the surface of the core layer 3 and/or cover layer 1, 5.

As cover layer 1, 5, hardwood veneer is spray on one side with the binder and attached onto the formed reinforcement layer 4 prior to hot pressing. Instead of hardwood veneer, a bamboo curtain sheet can be used as cover layer 1, 5 that is impregnated with resin with the retention rate of 15% to 50% and/or conditioned or dried under low temperature. As a third example, resin-impregnated paper can be used as cover layer 1, 5.

While the disclosure has been illustrated and described in detail in the foregoing drawings and description, the same is to be considered as exemplary and not restrictive in character, it being understood that only illustrative embodiments thereof have been shown and described and that all changes and modifications that come within the scope of the claims are desired to be protected.

## Claims

1. Container floor panel (10) for use as flooring of a shipping container, the container floor panel (10) comprises several layers (1, 2, 3, 4, 5) with at least one reinforcement layer (2, 4) formed by fibers (7) with a length of at least 300 mm, wherein the reinforcement layer (2, 4) comprises a binder and is hot pressed, **characterized in that** the fibers (7) are arranged in bundles (8) of a multiplicity of fibers (7).

2. Container floor panel (10) of claim 1, **characterized in that** the fibers (7) are sisal fibers.

3. Container floor panel (10) of claim 1, preferably of any of the preceding claims, **characterized in that** the fibers (7) are aligned in an aligning direction, preferably length direction (6) of the container floor panel (10).

4. Container floor panel (10) of the preceding claim, preferably of any of the preceding claims, **characterized in that** the reinforcement layer (2, 4) has the thickness of only one or at most three bundles (8).

5. Container floor panel (10) of the preceding claim and claim 3, preferably of any of the preceding claims, **characterized in that** the reinforcement layer (2, 4) is formed by rows of successively arranged bundles (8) in the aligning direction and/or rows of bundles (8) arranged adjacent to each other across the aligning direction.

6. Container floor panel (10) of claim 3, preferably of any of the preceding claims, **characterized in that** more than 80 % of the fibers (7) are aligned such that a geometrical line connecting both ends of the fiber (7) forms a deviation angle to the aligning direction for the fibers (7) within a range of -20° and 20°.

7. Container floor panel (10) of claim 1, preferably of any of the preceding claims, **characterized in that** the fibers (7) have a length of at least 900 mm, preferably at least 1000 mm.

8. Container floor panel (10) of claim 1, preferably of any of the preceding claims, **characterized in that** after hot pressing, the reinforcement layer (2, 4) is at least 1,5 mm and/or at most 10 mm thick.

9. Container floor panel (10) of claim 1, preferably of any of the preceding claims, **characterized in that** the reinforcement layer (2, 4) is neighboring a core layer (3) from below and/or above.

10. Container floor panel (10) of the preceding claim, preferably of any of the preceding claims, **characterized in that** the reinforcement layer (2, 4) is not crossed by a central plane of the container flooring panel (10) or the core layer (3) is crossed by the central plane.

11. Container floor panel (10) of the preceding claim, preferably of any of the preceding claims, **characterized in** the core layer (3) is formed by or mainly consists of binder covered longitudinal particles of lignocellulose material with a stalk-like structure and/or having a length of less than 100 mm or less than 4 mm.

12. Container floor panel (10) of the preceding claim, preferably of any of the preceding claims, **characterized in that** the core layer (3) is an OSSB (Oriented Structural Straw Board) mainly formed by straw or an OSRB (Oriented Structural Reed Board) mainly formed by reed.

13. Method to produce a container floor panel (10) that can be used as flooring of a shipping container and comprises several layers (1, 2, 3, 4, 5) with at least one reinforcement layer (2, 4) formed by fibers (7) with a length of at least 300 mm or 1000 mm, wherein the method steps include
- adding binder to the fibers (7) and/or to a neighboring layer (1, 3, 5),
- arranging the fibers (7) or bundles (8) of a multiplicity of the fibers (7) in rows of successively arranged bundles (8) in an aligning direction onto the neighboring layer (1, 3, 5), wherein the rows of bundles (8) are arranged adjacent to each other across the aligning direction to cover the neighboring layer (1, 3, 5).

## Patentansprüche

1. Containerbodenplatte (10) zur Verwendung als Bodenbelag eines Transportcontainers, die Containerbodenplatte (10) umfasst mehrere Schichten (1, 2, 3, 4, 5) mit mindestens einer Verstärkungsschicht (2, 4), die aus Fasern (7) mit einer Länge von mindestens 300 mm gebildet ist, wobei die Verstärkungsschicht (2, 4) ein Bindemittel umfasst und heißgepresst ist, **dadurch gekennzeichnet, dass** die Fasern (7) in Bündeln (8) aus einer Vielzahl von Fasern (7) angeordnet sind.

2. Containerbodenplatte (10) nach Anspruch 1, **dadurch gekennzeichnet, dass** die Fasern (7) Sisalfasern sind.

3. Containerbodenplatte (10) nach Anspruch 1, vorzugsweise nach einem der vorhergehenden Ansprüche, **dadurch gekennzeichnet, dass** die Fasern (7) in einer Ausrichtungsrichtung, vorzugsweise in Längsrichtung (6) der Containerbodenplatte (10) ausgerichtet sind.

4. Containerbodenplatte (10) nach dem vorhergehenden Anspruch, vorzugsweise nach einem der vorhergehenden Ansprüche, **dadurch gekennzeichnet, dass** die Verstärkungsschicht (2, 4) die Dicke von nur einem oder höchstens drei Bündeln (8) aufweist.

5. Containerbodenplatte (10) nach dem vorhergehenden Anspruch und Anspruch 3, vorzugsweise nach einem der vorhergehenden Ansprüche, **dadurch gekennzeichnet, dass** die Verstärkungsschicht (2, 4) durch Reihen von in Ausrichtrichtung aufeinanderfolgend angeordneten Bündeln (8) und/oder Reihen von Bündeln (8), die quer zur Ausrichtrichtung nebeneinander angeordnet sind, gebildet ist.

6. Containerbodenplatte (10) nach Anspruch 3, vorzugsweise nach einem der vorhergehenden Ansprüche, **dadurch gekennzeichnet, dass** mehr als 80 % der Fasern (7) so ausgerichtet sind, dass eine geometrische Linie, die beide Enden der Faser (7) verbindet, einen Abweichungswinkel zur Ausrichtrichtung der Fasern (7) innerhalb eines Bereichs von -20° und 20° bildet.

7. Containerbodenplatte (10) nach Anspruch 1, vorzugsweise nach einem der vorhergehenden Ansprüche, **dadurch gekennzeichnet, dass** die Fasern (7) eine Länge von mindestens 900 mm, vorzugsweise mindestens 1000 mm, aufweisen.

8. Containerbodenplatte (10) nach Anspruch 1, vorzugsweise nach einem der vorhergehenden Ansprüche, **dadurch gekennzeichnet, dass** die Verstärkungsschicht (2, 4) nach dem Heißpressen mindestens 1,5 mm und/oder höchstens 10 mm dick ist.

9. Containerbodenplatte (10) nach Anspruch 1, vorzugsweise nach einem der vorhergehenden Ansprüche, **dadurch gekennzeichnet, dass** die Verstärkungsschicht (2, 4) von unten und/oder oben an eine Kernschicht (3) angrenzt.

10. Containerbodenplatte (10) nach dem vorhergehenden Anspruch, vorzugsweise nach einem der vorhergehenden Ansprüche, **dadurch gekennzeichnet, dass** die Verstärkungsschicht (2, 4) nicht von einer Mittelebene der Containerbodenplatte (10) gekreuzt wird oder die Kernschicht (3) von der Mittelebene gekreuzt wird.

11. Containerbodenplatte (10) nach dem vorhergehenden Anspruch, vorzugsweise nach einem der vorhergehenden Ansprüche, **dadurch gekennzeichnet, dass** die Kernschicht (3) durch mit Bindemittel bedeckte Längspartikel aus Lignozellulosematerial mit einer stängelartigen Struktur und/oder mit einer Länge von weniger als 100 mm oder weniger als 4 mm gebildet ist oder hauptsächlich daraus besteht.

12. Containerbodenplatte (10) nach dem vorhergehenden Anspruch, vorzugsweise nach einem der vorhergehenden Ansprüche, **dadurch gekennzeichnet, dass** die Kernschicht (3) eine hauptsächlich aus Stroh bestehende OSSB (Oriented Structural Straw Board) oder eine hauptsächlich aus Schilf bestehende OSRB (Oriented Structural Reed Board) ist.

13. Verfahren zur Herstellung einer Containerbodenplatte (10), die als Bodenbelag eines Schiffscontainers verwendbar ist und mehrere Schichten (1, 2, 3, 4, 5) mit mindestens einer Verstärkungsschicht (2, 4), die aus Fasern (7) mit einer Länge von mindestens 300 mm oder 1000 mm gebildet ist, umfasst, wobei die Verfahrensschritte beinhalten
- Zugabe von Bindemittel zu den Fasern (7) und/oder zu einer benachbarten Schicht (1, 3, 5),
- Anordnen der Fasern (7) oder Bündel (8) einer Vielzahl der Fasern (7) in Reihen aufeinanderfolgend angeordneter Bündel (8) in einer Ausrichtrichtung auf die benachbarte Schicht (1, 3, 5), wobei die Reihen der Bündel (8) quer zur Ausrichtrichtung nebeneinander angeordnet sind, um die benachbarte Schicht (1, 3, 5) zu bedecken.

## Revendications

1. Panneau de plancher de conteneur (10) destiné à l'utilisation comme un plancher d'un conteneur d'expédition, le panneau de plancher de conteneur (10 comprenant plusieurs couches (1, 2, 3, 4, 5) avec au moins une couche de renforcement (2, 4) formée par des fibres (7) ayant une longueur d'au moins 300 mm, dans lequel la couche de renforcement (2, 4) comprend un liant et elle est pressée à chaud, **caractérisé en ce que** les fibres (7) sont disposées en bottes (8) d'une multitude de fibres (7).

2. Panneau de plancher de conteneur (10) selon la revendication 1, **caractérisé en ce que** les fibres (7) sont des fibres de sisal.

3. Panneau de plancher de conteneur (10) selon la revendication 1, de préférence selon l'une quelconque des revendications précédentes, **caractérisé en ce que** les fibres (7) sont alignées dans une direction d'alignement, de préférence dans une direction de longueur (6) du panneau de plancher de conteneur (10).

4. Panneau de plancher de conteneur (10) selon la revendication précédente, de préférence selon l'une quelconque des revendications précédentes, **caractérisé en ce que** la couche de renforcement (2, 4) a l'épaisseur d'une seule botte ou d'au plus trois bottes (8).

5. Panneau de plancher de conteneur (10) selon la revendication précédente et la revendication 3, de préférence selon l'une quelconque des revendications précédentes, **caractérisé en ce que** la couche de renforcement (2, 4) est formée par des rangées de bottes (8) disposées successivement dans la direction d'alignement et/ou par des rangées de bottes (8) disposées de manière adjacente l'une à l'autre le long de la direction d'alignement.

6. Panneau de plancher de conteneur (10) selon la revendication 3, de préférence selon l'une quelconque des revendications précédentes, **caractérisé en ce que** plus de 80 % des fibres (7) sont alignées de sorte qu'une ligne géométrique, qui relie les deux extrémités de la fibre (7), forme un angle de déviation par rapport à la direction d'alignement pour les fibres (7) sous un angle de -20° et de 20°.

7. Panneau de plancher de conteneur (10) selon la revendication 1, de préférence selon l'une quelconque des revendications précédentes, **caractérisé en ce que** les fibres (7) ont une longueur d'au moins 800 mm, de préférence d'au moins 1000 mm.

8. Panneau de plancher de conteneur (10) selon la revendication 1, de préférence selon l'une quelconque des revendications précédentes, **caractérisé en ce qu'**après la pression à chaud, la couche de renforcement (2, 4) a une épaisseur d'au moins 1,5 mm et/ou d'au moins 10 mm.

9. Panneau de plancher de conteneur (10) selon la revendication 1, de préférence selon l'une quelconque des revendications précédentes, **caractérisé en ce que** la couche de renforcement (2, 4) est voisine d'une couche de noyau (3) d'en bas et/ou d'en haut.

10. Panneau de plancher de conteneur (10) selon la revendication précédente, de préférence selon l'une quelconque des revendications précédentes, **caractérisé en ce que** la couche de renforcement (2, 4) n'est pas croisée par un plan médian du panneau de plancher de conteneur (10) ou la couche de noyau (3) est croisée par le plan médian.

11. Panneau de plancher de conteneur (10) selon la revendication précédente, de préférence selon l'une quelconque des revendications précédentes, **caractérisé en ce que** la couche de noyau (3) est formée par ou est principalement composée par des particules longitudinales couvertes de liant et en matériau ligno-cellulosique avec une structure en forme de tige et/ou ayant une longueur de moins de 100 mm ou de moins de 4 mm.

12. Panneau de plancher de conteneur (10) selon la revendication précédente, de préférence selon l'une quelconque des revendications précédentes, **caractérisé en ce que** la couche de noyau (3) est un OSSB (panneau structurel de particules orientées) principalement formé par la paille ou un OSRB (panneau structurel de lamelles orientées) principalement formé par le roseau.

13. Procédé de fabrication d'un panneau de plancher de conteneur (10), qui peut être utilisé comme un plancher d'un conteneur d'expédition et qui comprend plusieurs couches (1, 2, 3, 4, 5) avec au moins une couche de renforcement (2, 4) formée par des fibres (7) ayant une longueur d'au moins 300 mm ou d'au moins 1000 mm, dans lequel les étapes de procédé comprennent :
l'addition d'un liant aux fibres (7) et/ou à une couche voisine (1, 3, 5),
la disposition des fibres (7) ou des bottes (8) d'une multitude des fibres (7) en rangées de bottes (8) disposées successivement dans une direction d'alignement sur la couche voisine (1, 3, 5), dans lequel les rangées de bottes (8) sont disposées de manière adjacente l'une à l'autre le long de la direction d'alignement pour couvrir la couche voisine (1, 3, 5).
